# EUROPÄISCHE PATENTSCHRIFT

(11) **EP 1 433 671 B1**
(45) Veröffentlichungstag und Bekanntmachung des Hinweises auf die Patenterteilung: **17.05.2006**
(21) Anmeldenummer: 03028551.4
(22) Anmeldetag: 11.12.2003
(51) Int. Cl.: B60R 21/26

(54) **Gasgenerator**
Gasgenerator
Générateur de gaz

(30) Priorität: 23.12.2002 DE 20219899 U
(43) Veröffentlichungstag der Anmeldung: 30.06.2004
(73) Patentinhaber: TRW Airbag Systems GmbH, 84544 Aschau am Inn (DE)
(72) Erfinder: Schönhuber, Georg, 84565 Oberneukirchen (DE); Reed, Inman, 85652 Landsham (DE)
(74) Vertreter: Kitzhofer, Thomas

(56) Entgegenhaltungen:
- US-A- 5 551 725
- US-A- 5 803 494
- US-A- 6 131 948
- US-B1- 6 314 889
- US-B1- 6 315 322

## Beschreibung

Die Erfindung betrifft einen Gasgenerator gemäß dem oberbegriff des Anspruchs 1.

Ein derartiger Gasgenerator ist z.B. in der US 6 315 322 B1 beschrieben

Die US-A-6 131 948 zeigt einen Gasgenerator mit einer Druckgaskammer, die durcheine Membran von einer Anzünderkammer getrennt ist. Durch ein zwischen Anzünder und Membran angeordnetes, durch Wandabschnitte der Anzünderkammer geführtes verschiebbares Bauteil wird bei Aktivierung des Anzünders zunächst das Bauteil derartig bewegt, daß die Membran zerstört wird. Anschließend wird das Bauteil durch das Druckgas in die entgegengesetzte Richtung zurück zum Anzünder verschoben, wobei Ausströmöffnungen aus dem Gasgenerator freigegeben werden.

Die Erfindung stellt sich die Aufgabe, das Verhalten eines solchen Gasgenerators kurz nach dessen Aktivierung zu optimieren.

Dies wird bei einem Gasgenerator der eingangs genannten Art die Merkmale des Ansprunchs 1 durch'erreicht. akter vorbestimmbar. Auch nach der Verschiebung der Kappe ist durch den ersten Abschnitt und die Kappenform insgesamt gewährleistet, dass das für die Verbrennung des Treibstoffs in der Zünderkammer zur Verfügung stehende Volumen und die Volumenvergrößerung exakt definiert ist. Alle diese Punkte tragen dazu bei, das Anzündverhalten des Gasgenerators exakt reproduzierbar und definiert abstimmbar zu machen. Wenn die Kappe eine Ausströmöffnung in der Innenwand anfangs schließt, wird durch die Kappenform der Zeitpunkt der Freigabe der Ausströmöffnung ebenfalls klar definiert.

Diese Vorteile werden auch durch einen Gasgenerator nach Anspruch 14 erreicht.

In der Zünderkammer ist bevorzugt eine Treibladung enthalten, die als Verstärkerladung dienen kann.

Die Abschnitte der Umfangswand sind in den hier gezeigten Ausführungsformen zylindrisch und haben gleiche Außendurchmesser, so dass die Kappe einfach in die vorzugsweise ebenfalls zylindrische Zünderkammer eingesetzt werden kann.

Es hat sich gezeigt, dass eine gute Führung der Kappe in der Zünderkammer zu erreichen ist, wenn die axiale Länge des ersten Abschnitts in etwa der axialen Länge des zweiten Abschnitts entspricht.

Um das in dem vom zweiten Abschnitt und der Deckelwand umschlossenen Volumen und den darin enthaltenen Treibsatz nach außen abzudichten sowie einen definierten Verschiebewiderstand zu erhalten, liegt zumindest der erste Abschnitt an der Innenwandung unter Vorspannung an. Auch der zweite Abschnitt kann entsprechend vorgespannt sein.

Ein definiertes Ende des Verschiebevorgangs und damit ein definiertes größtes Volumen der Zünderkammer lassen sich festlegen, indem vorgesehen ist, dass der erste Abschnitt am Ende der Verschiebung an einem Gehäuseteil des Gasgenerators anschlägt. Der Anschlag kann natürlich ebenso an einem vom Gehäuse getrennten, im Gasgenerator angeordneten Bauteil erfolgen. Bevorzugt ist der erste Abschnitt so steif ausgeführt, dass er am Ende der Verschiebung nicht plastisch verformt wird, um die definierten Volumenverhältnisse zu erhalten.

In einer bevorzugten Ausführungsform gehen die Abschnitte einstückig ineinander über. Auch die Umfangswand und die Deckelwand sind einstückig miteinander verbunden. Die Kappe ist ein nämlich einstückiges Blechformteil, wobei die Umfangswand und die Deckelwand durch Umformen des Blechformteils gebildet sind. Auf diese Weise ergibt sich auch eine kostengünstige Herstellung sowie ein geringes Gewicht der Kappe.

Der erste und/oder der zweite Abschnitt können zumindest abschnittsweise doppelwandig ausgebildet sein, was auch die Stabilität der Kappe erhöht. Die doppelwandige Ausbildung lässt sich einfach z.B. durch ein Umformverfahren erreichen.

Bevorzugt ist die Umfangswand durch plastisches axiales Ziehen der Deckelwand abschnittsweise in das Innere der Kappe gestülpt und in dem eingestülpten Bereich doppelwandig ausgebildet. Für die Stabilität ist es dabei vorteilhaft, wenn im doppelwandigen Bereich der Umfangswand der innere Wandungsabschnitt am äußeren anliegt.

Weitere Merkmale und Vorteile der Erfindung ergeben sich aus der nachfolgenden Beschreibung eines Ausführungsbeispiels mit Bezug auf die beigefügten Zeichnungen. In diesen zeigen:
- Figur 1 einen erfindungsgemäßen Gasgenerator;
- Figur 2 eine Variante des Gasgenerators aus Figur 1;
- Figur 3 eine weitere Variante eines Gasgenerators;
- Figur 4 eine Variante des Gasgenerators aus Figur 3; und
- Figur 5 eine Kappe zur Verwendung in einem Gasgenerator nach Figur 3.

In den Figuren ist ein Gasgenerator 10 gezeigt, der in Aufbau und Funktion im wesentlichen dem in der US 6 315 322 B1 beschriebenen entspricht. Für die aus dieser Schrift bekannten Merkmale wird daher darauf verwiesen.

Das Gehäuse des Gasgenerators 10 weist eine einen Totraum 11 sowie eine darunterliegende Zünderkammer 12 umfangsmäßig umgebende Innenwandung 14 auf, an deren (in den Figuren unterem) Ende ein Anzünder 16 so angeordnet ist, dass sein oberes Ende in die Zünderkammer 12 mündet. In der Innenwandung 14 sind Ausströmöffnungen 18 vorgesehen, von denen hier nur eine gezeigt ist, über die in der Zünderkammer 12 erzeugtes Gas in eine Brennkammer 20 überströmen kann. Die Brennkammer 20 ist mit einem hier nicht gezeigten geeigneten Treibstoff gefüllt.

Eine längs der Innenwand 14 verschiebliche Kappe 22 trennt den Totraum 11 von der Zünderkammer 12. Die Kappe 22 besitzt eine kreiszylindrische Umfangswand 24, die in Axialrichtung gesehen einen oberen ersten Abschnitt 26 und einen sich daran anschließenden unteren zweiten Abschnitt 28 aufweist. Im hier gezeigten Beispiel sind die Durchmesser des ersten und des zweiten Abschnitts 26, 28 gleich, und der Durchmesser der Kappe 22 und der Zünderkammer 12 sind so gewählt, dass sowohl der erste als auch der zweite Abschnitt 26, 28 unter Vorspannung über den gesamten Umfang an der Innenwandung 14 anliegen.

Die Kappe 22 ist in Axialrichtung in Verschieberichtung R (siehe Pfeil) gegen einen durch die Vorspannung bestimmten Widerstand in der Zünderkammer 12 verschiebbar.

Der zweite Abschnitt 28 ist von einer sich radial erstreckenden Deckelwand 30 begrenzt. In dem durch die Deckelwand 30 und dem zweiten Abschnitt 28 gebildeten Volumen ist ein Treibsatz 32 aufgenommen, der z.B. die Funktion einer Verstärkerladung für den Anzünder 16 übernehmen kann.

Die Kappe 22 ist so angeordnet, dass sie vor der Zündung, d.h. Aktivierung, des Gasgenerators 10 die Ausströmöffnung 18 verdeckt.

Die Kappe ist vor der Aktivierung des Gasgenerators 10 ganz am unteren Ende der Zünderkammer 12 (der untere Rand des Abschnitts 28 schlägt an einem Absatz an) und direkt über dem freien Ende des Anzünders 16 angeordnet. Das Volumen der Zünderkammer 12, in dem die Treibladung 32 enthalten ist, ist dadurch genau definiert.

In der gezeigten Ausführungsform besteht die Kappe aus einem umgeformten einstückigen Blechteil, so dass sowohl der erste Abschnitt 26 und der zweite Abschnitt 28 als auch die Umfangswand 24 und die Deckelwand 30 einstückig ineinander übergehen. Die Form der Kappe 22, im Schnitt ein "H", wird dadurch erreicht, dass die Umfangswand durch plastisches axiales Ziehen der Deckelwand abschnittsweise in das Innere der Kappe gestülpt ist. Dies führt dazu, dass der erste Abschnitt 28 doppelwandig ausgeführt ist, wobei der innere Wandabschnitt am äußeren anliegt. Es ist auch denkbar, zusätzlich den ersten Abschnitt 26 ebenfalls doppelwandig auszubilden.

Die Kappe 22 kann statt aus Metall auch aus einem geeigneten Kunststoff oder einem geeigneten anderen Material gefertigt sein, sie kann auch z.B. auch als Gußteil oder als Stanzbiegeteil statt als Umformteil ausgebildet sein.

Bei der Aktivierung des Gasgenerators 10 werden zunächst der Anzünder 16 und kurz danach die Treibladung 32 gezündet. Aufgrund der Gasentwicklung wird zu einem unter anderem durch den Verschiebewiderstand der Kappe 22 in der Zünderkammer 12 bestimmten Zeitpunkt nach der Zündung die Kappe 22 in Richtung R in der Zünderkammer 12 nach oben verschoben, wobei die Ausströmöffnung 18 in die Brennkammer 20 freigegeben wird. Durch die überströmenden heißen Gase wird dann der in der Brennkammer 20 enthaltene Treibstoff gezündet. Das Volumen der Zünderkammer 12 nimmt sehr genau vorbestimmbar zu, das des Totraums 11 entsprechend ab.

Die Vorspannung der Umfangswand 24 gegen die Innenwand 14 ist so groß, dass auch ein Abdichten gegen das Überströmen von Gas in den Totraum 11 bzw. den restlichen Gasgenerator 10 gegeben ist.

Beim Abbrand der in der Zünderkammer 12 befindlichen Treibladung wird die Umfangswand 24 radial an die Innenwandung 14 angedrückt, wobei der Verschiebewiederstand und die Abdichtung erhöht werden.

Die Verschiebung der Kappe 22 endet, wenn der axiale, dem Anzünder 16 abgewandte Rand 211 (oberer Rand) des ersten Abschnitts 26 an einem Gehäuseteil oder einem anderen, im Gehäuse des Gasgenerators 10 angeordneten Bauteil, anschlägt. Die Kappe 22 ist so ausgebildet, dass der erste Abschnitt 26 eine derartige Eigensteifigkeit aufweist, dass beim Anschlag keine plastische Verformung der Kappe 22 stattfindet. Hierdurch bleibt das Zünderkammervolumen, das das Abbrandverhalten der Treibladung 32 beeinflußt, genau definiert. Im hier gezeigten Beispiel entspricht die axiale Länge des ersten Abschnitts 26 in etwa der axialen Länge des zweiten Abschnitts 28.

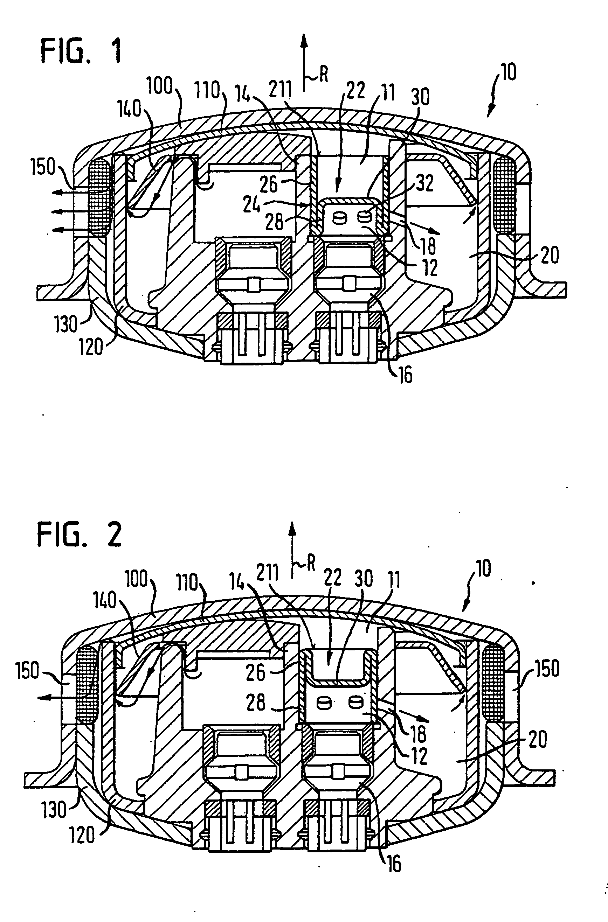

Die in Figur 2 gezeigte Variante des Gasgenerators 10 unterscheidet sich von der in Figur 1 gezeigten lediglich dadurch, daß die Kappe 22 um 180° gedreht in die Zünderkammer 12 eingesetzt ist. In diesem Fall ist jetzt also der erste Abschnitt 26 doppelwandig und der zweite Abschnitt 28 nur einwandig ausgebildet, wodurch die Stabilität des ersten Abschnitts 26 höher ist als bei dem Beispiel in Figur 1. Vorteile und Funktionsweise des Gasgenerators 10 sind wie oben dargelegt.

Bei beiden Ausführungsformen führt die Druckerhöhung im Gasgenerator zu elastischen Auslenkungen von Gehäuseteilen 100 bis 140 relativ zueinander. Durch die Relativbewegungen der Gehäuseteile 100 bis 140 zueinander werden Strömungswege frei (siehe Pfeile), so daß das Gas schließlich über Ausströmöffnungen 150 aus dem Gasgenerator gelangt.

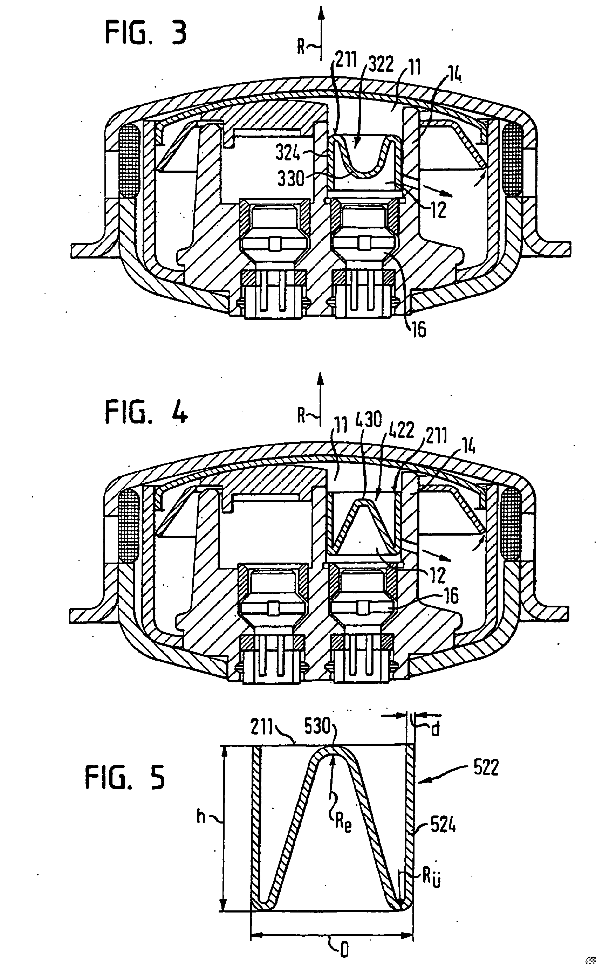

In den Figuren 3 bis 5 sind weitere mögliche Formen der Kappe dargestellt. Nur die für die Beschreibung relevanten Bauteile sind mit Bezugszeichen versehen. Der sonstige Aufbau und die Funktionsweise der gezeigten Gasgeneratoren ist wie oben beschrieben.

Bei der in Figur 3 gezeigten Variante weist die Kappe 322 eine zylindrische Umfangswand 324 und eine in der Mitte muldenförmig eingestülpte Deckelwand 330 auf. Die Einstülpung ist abgerundet und kann z.B. halbkugelförmig sein. Die Deckelwand 330 ist an einem Ende der Kappe 322 einstückig mit der Umfangswand 324 verbunden. Die Kappe 322 ist so in den Gasgenerator eingesetzt, daß das freie Ende der Umfangswand 324 zum Anzünder 16 gerichtet ist. Die Zünderkammer 12 ist nach oben durch die, von innen gesehen, konvexe Deckelwand 330 begrenzt. Durch den Grad des Einstülpens der Deckelwand 330 in Richtung Anzünder 16 läßt sich das Volumen der Zünderkammer 12 exakt definieren.

Die Umfangswand 324 liegt unter Vorspannung an der Innenwandung 14 der Zünderkammer 12 an, so daß ein festgelegter Widerstand zur Verschiebung der Kappe 322 überwunden werden muß und die Zünderkammer 12 gegen den oberhalb der Kappe 322 gelegenen Totraum 11 abgedichtet ist.

Auch hier, wie bei den Figuren 4 und 5, wird beim Abbrand des in der Zünderkammer 12 befindlichen Treibsatzes (siehe Fig. 1) die Umfangswand 324 radial an die Innenwandung 14 angedrückt, wobei der Verschiebewiederstand und die Abdichtung vergrößert werden.

Die in Figur 4 gezeigte Kappe 422 ist ähnlich der in Figur 3 gezeigten Kappe 322 geformt. Hier ist allerdings die Deckelwand 430 im Querschnitt kegelstumpfförmig eingestülpt, und zudem ist die Kappe 422 gegenüber der Kappe 322 aus Figur 3 um 180° gedreht in den Gasgenerator eingesetzt. Vom Anzünder 16 her gesehen bildet die Deckelwand 430 also eine konkave Begrenzung der Zünderkammer 12.

In Figur 5 ist eine weitere Variante einer Kappe 522 gezeigt. Der Unterschied zu der in Figur 4 dargestellten Kappe 422 liegt darin, daß die Einstülpung der Deckelwand 530 in der Mitte der Deckelwand abgerundet, d.h. ohne Kanten, ausgebildet ist. In Figur 5 sind beispielhaft Maße für die einzelnen Abschnitte der Kappe 522 angegeben. Diese Maße lassen sich auch auf die anderen beschriebenen Kappen 22, 322, 422 übertragen. Der Durchmesser D der Kappe 522 beträgt 13,3 mm, die Höhe h 13 mm, als Wandstärke d sind hier 0,6 mm gewählt, und die Krümmungsradien der Einstülpung Rₑ bzw. am Übergang zwischen Umfangswand 524 und Deckelwand 530 R_{ü} betragen 1,5 mm bzw 0.9 mm.

Auch bei den Ausführungsformen nach den Figuren 3 bis 5 schlägt am Ende des Verschiebewegs der obere axiale Rand 211 der Umfangswand 324, 424, 524 gegen das Gehäuseteil 110.

Die Deckelwand 30 der Ausführungsformen nach Figuren 1 und 2 kann auch eine der Deckelwand 322, 422, 522 entsprechende Form aufweisen.

## Patentansprüche

1. Gasgenerator mit
einem Gehäuse mit einer Innenwandung (14), die eine Zünderkammer (12) umfangsmäßig begrenzt,
wenigstens einem in die Zünderkammer (12) mündenden Anzünder (16) und
einer bei Aktivierung des Gasgenerators (10) längs der Innenwandung (14) in einer vom Anzünder (16) weg weisenden Verschieberichtung (R) verschieblich angeordneten, die Zünderkammer (12) begrenzenden Kappe (22), die eine zylindrische Umfangswand (24) sowie eine sich radial erstreckende Deckelwand (30) hat,
wobei die Innenwandung (14) wenigstens eine Ausströmöffnung (18) der Zünderkammer (12) aufweist und die Kappe (22) so ausgebildet ist, dass sie vor der Aktivierung des Gasgenerators (10) die Ausströmöffnung (18) verdeckt und im Verlauf der Aktivierung des Gasgenerators (10) und der Verschiebung der Kappe (22) in Verschieberichtung (R) die Ausströmöffnung (18) freigibt, so dass in der Zünderkammer (12) erzeugtes Gas in eine Brennkammer (20) überströmen kann,
**dadurch gekennzeichnet, dass** die Umfangswand (24) einen sich von der Dekkelwand (30) in Verschieberichtung (R) erstreckenden ersten Abschnitt (26) und einen sich in entgegengesetzter Richtung erstreckenden zweiten Abschnitt (28) hat,
wobei die Abschnitte (26, 28) an der Innenwand (14) anliegen und die Kappe (22) bei ihrer Verschiebung führen.

2. Gasgenerator nach Anspruch 1, **dadurch gekennzeichnet, dass** die Zünderkammer (12) eine Treibladung (32) enthält.

3. Gasgenerator nach einem der vorhergehenden Ansprüche, **dadurch gekennzeichnet, dass** die Abschnitte (26, 28) zylindrisch sind und gleiche Außendurchmesser haben.

4. Gasgenerator nach einem der vorhergehenden Ansprüche, **dadurch gekennzeichnet, dass** die axiale Länge des ersten Abschnitts (26) in etwa der axialen Lange des zweiten Abschnitts (28) entspricht.

5. Gasgenerator nach einem der vorhergehenden Ansprüche, **dadurch gekennzeichnet, dass** zumindest der erste Abschnitt (26) an der Innenwandung (14) unter Vorspannung anliegt.

6. Gasgenerator nach einem der vorhergehenden Ansprüche, **dadurch gekennzeichnet, dass** der erste Abschnitt (26) am Ende der Verschiebung an einem Gehäuseteil des Gasgenerators (10) anschlägt.

7. Gasgenerator nach einem der vorhergehenden Ansprüche, **dadurch gekennzeichnet, dass** der erste Abschnitt (26) so steif ausgeführt ist, dass er am Ende der Verschiebung nicht plastisch verformt wird.

8. Gasgenerator nach einem der vorhergehenden Ansprüche, **dadurch gekennzeichnet, dass** die Abschnitte (26, 28) einstückig ineinander übergehen.

9. Gasgenerator nach einem der vorhergehenden Ansprüche, **dadurch gekennzeichnet, dass** die Umfangswand (24) und die Deckelwand (30) einstückig miteinander verbunden sind.

10. Gasgenerator nach einem der vorhergehenden Ansprüche, **dadurch gekennzeichnet, dass** die Kappe (22) ein einstückiges Blechformteil ist, wobei die Umfangswand (24) und die Deckelwand (30) durch Umformen des Blechformteils gebildet sind.

11. Gasgenerator nach einem der vorhergehenden Ansprüche, **dadurch gekennzeichnet, dass** der erste und/oder der zweite Abschnitt (26, 28) zumindest abschnittsweise doppelwandig ausgebildet sind.

12. Gasgenerator nach einem der vorhergehenden Ansprüche, **dadurch gekennzeichnet, dass** die Umfangswand (24) durch plastisches axiales Ziehen der Deckelwand (30) abschnittsweise in das Innere der Kappe (22) gestülpt und in dem eingestülpten Bereich doppelwandig ausgebildet ist.

13. Gasgenerator nach Anspruch 11 oder 12, **dadurch gekennzeichnet, dass** im doppelwandigen Bereich der Umfangswand (24) der innere Wandungsabschnitt am äußeren anliegt.

14. Gasgenerator mit
einem Gehäuse mit einer Innenwandung (14), die eine Zünderkammer (12) umfangsmäßig begrenzt,
wenigstens einem in die Zünderkammer (12) mündenden Anzünder (16) und
einer bei Aktivierung des Gasgenerators (10) längs der Innenwandung (14) in einer vom Anzünder (16) weg weisenden Verschieberichtung (R) verschieblich angeordneten, die Zünderkammer (12) begrenzenden Kappe (22), die eine zylindrische Umfangswand (24) sowie eine sich radial erstreckende Deckelwand (30) hat, und die ein einstückiges Blechformteil ist, wobei die Umfangswand (24) und die Deckelwand (30) durch Umformen des Blechformteils gebildet sind,
**dadurch gekennzeichnet, daß** die Deckelwand (30) axial in das Innere der Kappe (22) gestülpt ist.

15. Gasgenerator nach einem der vorhergehenden Ansprüche, **dadurch gekennzeichnet, daß** der dem Anzünder (16) abgewandte axiale Rand (211) der Umfangswand (24) am Ende der Verschiebung an einem Gehäuseteil des Gasgenerators (10) anschlägt.

16. Gasgenerator nach einem der Ansprüche 14 und 15, **dadurch gekennzeichnet, daß** die Innenwandung (14) wenigstens eine Ausströmöffnung (18) der Zünderkammer (12) aufweist und die Kappe (22) so ausgebildet ist, dass sie vor der Aktivierung des Gasgenerators (10) die Ausströmöffnung (18) verdeckt und im Verlauf der Aktivierung des Gasgenerators (10) und der Verschiebung der Kappe (22) die Ausströmöffnung (18) freigibt.

## Claims

1. A gas generator comprising
a housing having an inner wall (14) delimiting an igniter chamber (12) peripherally,
at least one igniter (16) opening into the igniter chamber (12), and
a cap (22) delimiting the igniter chamber (12) and arranged to be displaceable along the inner wall (14) in a displacement direction (R) directed away from the igniter (16) upon activation of the gas generator (10), the cap (22) having a cylindrical peripheral wall (24) and a radially extending cover wall (30),
the inner wall (14) having at least one outflow opening (18) of the igniter chamber (12) and the cap (22) being constructed such that before the activation of the gas generator (10) it covers the outflow opening (18) and in the course of the activation of the gas generator (10) and the displacement of the cap (22) in the displacement direction (R) it exposes the outflow opening (18), so that gas generated in the igniter chamber (12) can overflow into a combustion chamber (20),
**characterized in that** the peripheral wall (24) has a first section (26) extending from the cover wall (30) in the displacement direction (R) and a second section (28) extending in the opposite direction,
the sections (26, 28) lying against the inner wall (14) and guiding the cap (22) during its displacement.

2. The gas generator according to Claim 1, **characterized in that** the igniter chamber (12) contains a propellant charge (32).

3. The gas generator according to any of the preceding claims, **characterized in that** the sections (26, 28) are cylindrical and have the same external diameters.

4. The gas generator according to any of the preceding claims, **characterized in that** the axial length of the first section (26) corresponds approximately to the axial length of the second section (28).

5. The gas generator according to any of the preceding claims, **characterized in that** at least the first section (26) lies against the inner wall (14) under prestress.

6. The gas generator according to any of the preceding claims, **characterized in that** the first section (26) strikes against a housing part of the gas generator (10) at the end of the displacement.

7. The gas generator according to any of the preceding claims, **characterized in that** the first section (26) is constructed to be so rigid that it is not plastically deformed at the end of the displacement.

8. The gas generator according to any of the preceding claims, **characterized in that** the sections (26, 28) continue into each other in one piece.

9. The gas generator according to any of the preceding claims, **characterized in that** the peripheral wall (24) and the cover wall (30) are connected with each other in one piece.

10. The gas generator according to any of the preceding claims, **characterized in that** the cap (22) is a one-piece sheet metal shaped part, the peripheral wall (24) and the cover wall (30) being formed by reshaping of the sheet metal shaped part.

11. The gas generator according to any of the preceding claims, **characterized in that** the first and/or the second section (26, 28) are at least partially designed so as to be double-walled.

12. The gas generator according to any of the preceding claims, **characterized in that** the peripheral wall (24) is partially turned into the interior of the cap (22) by plastic axial drawing of the cover wall (30) and is designed so as to be double-walled in the turned-in region.

13. The gas generator according to Claim 11 or 12, **characterized in that** in the double-walled region of the peripheral wall (24) the inner wall section lies against the outer wall section.

14. A gas generator comprising
a housing having an inner wall (14) delimiting an igniter chamber (12) peripherally,
at least one igniter (16) opening into the igniter chamber (12), and
a cap (22) delimiting the igniter chamber (12) and arranged to be displaceable along the inner wall (14) in a displacement direction (R) directed away from the igniter (16) upon activation of the gas generator (10), the cap (22) having a cylindrical peripheral wall (24) and a radially extending cover wall (30) and being a one-piece sheet metal shaped part, the peripheral wall (24) and the cover wall (30) being formed by reshaping of the sheet metal shaped part, **characterized in that** the cover wall (30) is turned axially into the interior of the cap (22).

15. The gas generator according to any of the preceding claims, **characterized in that** the axial edge (211) of the peripheral wall (24) facing away from the igniter (16) strikes against a housing part of the gas generator (10) at the end of the displacement.

16. The gas generator according to either of Claims 14 and 15, **characterized in that** the inner wall (14) has at least one outflow opening (18) of the igniter chamber (12) and the cap (22) is constructed such that before the activation of the gas generator (10) it covers the outflow opening (18) and in the course of the activation of the gas generator (10) and the displacement of the cap (22) it exposes the outflow opening (18).

## Revendications

1. Générateur de gaz comportant
un boîtier avec une paroi intérieure (14) qui délimite une chambre d'allumage (12) sur la périphérie,
au moins un allumeur (16) débouchant dans la chambre d'allumage (12) et
un capuchon (22) délimitant la chambre d'allumage (12) et agencée de manière déplaçable le long de la paroi intérieure (14) dans une direction de déplacement (R) orientée en éloignement de l'allumeur (16) lors d'une activation du générateur de gaz (10), le capuchon (22) ayant une paroi périphérique (24) cylindrique ainsi qu'une paroi de couvercle (30) s'étendant radialement,
la paroi intérieure (14) présentant au moins un orifice d'écoulement de sortie (18) de la chambre d'allumage (12), et le capuchon (22) étant réalisé de telle sorte qu'avant l'activation du générateur de gaz (10), il recouvre l'orifice d'écoulement de sortie (18) et au cours de l'activation du générateur de gaz (10) et du déplacement du capuchon (22) en direction de déplacement (R), il libère l'orifice d'écoulement de sortie (18), de telle sorte que du gaz produit dans ia chambre d'allumage (12) peut se répandre dans la chambre de combustion (20),
**caractérisé en ce que** la paroi périphérique (24) a un premier tronçon (26) s'étendant en direction de déplacement (R) depuis la paroi de couvercle (30) et un deuxième tronçon (28) s'étendant en direction opposée,
les tronçons (26, 28) prenant appui sur la paroi intérieure (14) et guidant le capuchon (22) lors de son déplacement.

2. Générateur de gaz selon la revendication 1, **caractérisé en ce que** la chambre d'allumage (12) contient un combustible (32).

3. Générateur de gaz selon l'une des revendications précédentes, **caractérisé en ce que** les tronçons (26, 28) sont cylindriques et ont les mêmes diamètres extérieurs.

4. Générateur de gaz selon l'une des revendications précédentes, **caractérisé en ce que** la longueur axiale du premier tronçon (26) correspond approximativement à la longueur axiale du deuxième tronçon (28).

5. Générateur de gaz selon l'une des revendications précédentes, **caractérisé en ce qu'**au moins le premier tronçon (26) est en appui sous précontrainte sur la paroi intérieure (14).

6. Générateur de gaz selon l'une des revendications précédentes, **caractérisé en ce que** le premier tronçon (26) vient en butée sur une partie de boîtier du générateur de gaz (10) à la fin du déplacement.

7. Générateur de gaz selon l'une des revendications précédentes, **caractérisé en ce que** le premier tronçon (26) est réalisé si rigide qu'il n'est pas déformé plastiquement à la fin du déplacement.

8. Générateur de gaz selon l'une des revendications précédentes, **caractérisé en ce que** les tronçons (26, 28) passent d'un seul tenant l'un dans l'autre.

9. Générateur de gaz selon l'une des revendications précédentes, **caractérisé en ce que** la paroi périphérique (24) et la paroi de couvercle (30) sont reliées d'un seul tenant l'une à l'autre.

10. Générateur de gaz selon l'une des revendications précédentes, **caractérisé en ce que** le capuchon est une pièce façonnée d'un seul tenant en tôle, la paroi périphérique (24) et la paroi de couvercle (30) étant formées par formage de la pièce façonnée en tôle.

11. Générateur de gaz selon l'une des revendications précédentes, **caractérisé en ce que** le premier tronçon (26) et/ou le deuxième tronçon (28) sont réalisés à double paroi au moins par sections.

12. Générateur de gaz selon l'une des revendications précédentes, **caractérisé en ce que** la paroi périphérique (24) est retournée au moins par sections dans l'intérieur du capuchon (22) en tirant axialement la paroi de couvercle (30) et est réalisée à double paroi dans la région retournée.

13. Générateur de gaz selon la revendication 11 ou 12, **caractérisé en ce que** dans la région à double paroi de la paroi périphérique (24), le tronçon de paroi intérieur est en appui sur le tronçon de paroi extérieur.

14. Générateur de gaz comportant
un boîtier avec une paroi intérieure (14) qui délimite une chambre d'allumage (12) sur la périphérie,
au moins un allumeur (16) débouchant dans la chambre d'allumage (12) et
un capuchon (22) délimitant la chambre d'allumage (12) et agencé de manière déplaçable le long de la paroi intérieure (14) dans une direction de déplacement (R) orientée en éloignement de l'allumeur (16) lors d'une activation du générateur de gaz (10), le capuchon (22) ayant une paroi périphérique (24) cylindrique ainsi qu'une paroi de couvercle (30) s'étendant radialement et étant une pièce façonnée d'un seul tenant en tôle, la paroi périphérique (24) et la paroi de couvercle (30) étant formées par formage de la pièce façonnée en tôle,
**caractérisé en ce que** la paroi de couvercle (30) est retournée axialement dans l'intérieur du capuchon (22).

15. Générateur de gaz selon l'une des revendications précédentes, **caractérisé en ce que** le bord axial (211) de la paroi périphérique (24), qui est détourné de l'allumeur (16) vient buter à la fin du déplacement sur une partie de boîtier du générateur de gaz (10).

16. Générateur de gaz selon l'une des revendications 14 et 15, **caractérisé en ce que** la paroi intérieure (14) présente au moins un orifice d'écoulement de sortie (18) de la chambre d'allumage (12) et le capuchon (22) est réalisé de telle sorte qu'avant l'activation du générateur de gaz (10), il recouvre l'orifice d'écoulement de sortie (18) et qu'au cours de l'activation du générateur de gaz (10) et du déplacement du capuchon (22), il libère l'orifice d'écoulement de sortie (18).
